# EUROPÄISCHE PATENTANMELDUNG

(11) **EP 1 139 078 A2**
(43) Veröffentlichungstag der Anmeldung: **04.10.2001**
(21) Anmeldenummer: 01107953.0
(22) Anmeldetag: 28.03.2001
(51) Int. Cl.: G01G 19/414

(54) **Gewichtsbestimmung**

(30) Priorität: 29.03.2000 DE 10015586
(71) Anmelder: Delphi Technologies, Inc., Troy, MI 48007 (US)
(72) Erfinder: Fischer, Thomas, 57482 Wenden (DE); Hirsch, Krystian, 41489 Wülfrath (DE)
(74) Vertreter: Manitz, Finsterwald & Partner

(57) **Zusammenfassung**

Die Erfindung betrifft ein Verfahren zum Bestimmen des Gewichts einer auf einem Fahrzeugsitz befindlichen Masse, bei dem während des Betriebs des Fahrzeugs mit wenigstens einem dem Fahrzeugsitz zugeordneten Drucksensor der über die Masse aufgebrachte Druck gemessen wird, mit zumindest einem Beschleunigungssensor die in vertikaler Richtung wirkende Beschleunigung gemessen wird, und die Druckdaten gemeinsam mit den Beschleunigungsdaten ausgewertet werden. Die Erfindung betrifft außerdem eine Vorrichtung zur Gewichtsbestimmung.

## Beschreibung

Die Erfindung betrifft ein Verfahren und eine Vorrichtung zum Bestimmen des Gewichts einer auf einem Fahrzeugsitz befindlichen Masse.

Insbesondere im Hinblick auf Insassenrückhaltesysteme und dabei vor allem Airbags ist es wünschenswert, automatisch zum einen zu erkennen, ob auf dem betreffenden Fahrzeugsitz eine Person sitzt, und zum anderen, das Gewicht dieser Person zu ermitteln.

Insassennachweissysteme sind grundsätzlich bekannt. Diese arbeiten beispielsweise mit einem am Fahrzeugsitz angeordneten Drucksensor, mit dem der auf dem Fahrzeugsitz lastende Druck gemessen werden kann. Problematisch bei derartigen Systemen ist zum einen, daß diese nicht unterscheiden können, ob der gemessene Druck ausschließlich von einer auf dem Fahrzeugsitz befindlichen Masse herrührt oder teilweise durch eine die Masse auf den Fahrzeugsitz drückende Zusatzkraft hervorgerufen wird. Ursache derartiger die Gewichtsmessung verfälschender Zusatzkräfte sind in der Praxis z.B. Haltegurte, mit denen Kindersitze auf dem Fahrzeugsitz festgeschnallt werden. Ein mit einer starken Gurtkraft auf den Fahrzeugsitz gepreßter Kindersitz kann zu dem gleichen Ausgangssignal des Drucksensors führen wie eine vergleichsweise leichte erwachsene Person. Problematisch ist hierbei, daß bei derartigen leichten Personen, sofern ihr Gewicht innerhalb eines vorgegebenen Normbereiches liegt, ein Insassenrückhaltesystem wie z. B. eine Airbaganordnung aktiviert sein soll, während bei einem Säugling oder Kleinkind der Airbag nicht auslösen soll. Ein in beiden Fällen das gleiche Drucksignal liefernder Drucksensor ist somit für eine entsprechende automatische Ansteuerung des Rückhaltesystems ungeeignet.

Es sind Einrichtungen bekannt, mit denen Gurtspannungen gemessen werden und somit die vom Drucksensor gelieferten Werte korrigiert werden können. Derartige Gurtspannungsmeßeinrichtungen erhöhen jedoch die Systemkosten und verkomplizieren das Gesamtnachweissystem.

Es ist das der Erfindung zugrundeliegende Problem (Aufgabe), eine Möglichkeit zu schaffen, das Gewicht einer auf einem Fahrzeugsitz befindlichen Masse mit möglichst hoher Genauigkeit zu bestimmen, wobei dies insbesondere mit geringem konstruktiven Aufwand sowie niedrigen Kosten verbunden sein soll.

Die Lösung dieser Aufgabe erfolgt durch die Merkmale des unabhängigen Verfahrensanspruchs 1 und insbesondere dadurch, daß während des Betriebs des Fahrzeugs mit wenigstens einem dem Fahrzeugsitz zugeordneten Drucksensor der über die Masse aufgebrachte Druck gemessen wird, mit zumindest einem Beschleunigungssensor die in vertikaler Richtung wirkende Beschleunigung gemessen wird, und die Druckdaten gemeinsam mit den Beschleunigungsdaten ausgewertet werden.

Erfindungsgemäß können zusätzlich zu den vom Drucksensor ermittelten Druckdaten Informationen über die während des Fahrzeugbetriebs herrschenden dynamischen Verhältnisse zur Gewichtsbestimmung herangezogen werden, indem die in vertikaler Richtung wirkende, d.h. der Erdbeschleunigung überlagerte Beschleunigung gemessen wird.

Mit den dadurch gewonnenen Beschleunigungsdaten stehen Informationen zur Verfügung, die den Betrieb des Fahrzeugs betreffen. Durch die Erfindung kann somit der zeitliche Verlauf der Druckdaten mit dem zeitlichen Verlauf der Beschleunigungsdaten verglichen werden, und es kann nach Korrelationen in dem zeitlichen Verhalten dieser beiden Größen gesucht werden. Da zeitliche Variationen der mit dem Drucksensor gemessenen Druckdaten sowohl durch den Betrieb des Fahrzeugs als auch durch vom Fahrzeugbetrieb unabhängige Bewegungen der Masse, beispielsweise Bewegungen eines Kindes auf einem Kindersitz, hervorgerufen werden, kann mittels der ausschließlich den Fahrzeugbetrieb betreffenden Beschleunigungsdaten überprüft werden, ob zeitliche Variationen der Druckdaten in Bewegungen des Fahrzeugs ihre Ursache haben.

Die Erfindung ermöglicht es also, das dynamische Verhalten der Masse zu analysieren und dabei sicherzustellen, daß zur Bestimmung des Gewichts der Masse nur solche Druckdaten herangezogen werden, die allein durch Bewegungen des Fahrzeugs hervorgerufene Druckschwankungen repräsentieren.

Da es sich bei dem Gesamtsystem aus Fahrzeug, Fahrzeugsitz und auf dem Fahrzeugsitz befindlicher Masse um ein schwingungsfähiges System handelt, wird die Masse während des Betriebs des Fahrzeugs, beispielsweise beim Fahren über eine unebene Straße mit z. B. Kopfsteinpflaster oder Bodenwellen, zu vertikalen Schwingungen angeregt. Die charakteristischen Eigenschaften dieser erzwungenen Schwingungen können aus den ermittelten Druckdaten und Beschleunigungsdaten abgeleitet werden.

Die Erfindung ermöglicht es, das Gewicht der Masse aus dessen dynamischem Verhalten zu bestimmen, das von masselosen, lediglich das statische Gewicht der Masse scheinbar erhöhenden Zusatzkräften - wie z.B. die Masse in den Fahrzeugsitz drückenden Gurtkräften - unabhängig ist.

Die erfindungsgemäße zusätzliche Beschleunigungsmessung gestattet also zum einen die Auswahl von für eine dynamische Analyse geeigneten Druckdaten und zum anderen die Analyse des dynamischen Verhaltens der jeweiligen Masse auf der Grundlage der Beschleunigungsdaten und der Druckdaten.

Durch die erfindungsgemäße gemeinsame Auswertung der Druckdaten mit den Beschleunigungsdaten kann somit zwischen einer durch zusätzliche Kräfte auf den Fahrzeugsitz gedrückten Masse einerseits und einer freien Masse gleichen Gewichts andererseits unterschieden werden, wobei diese Massen zwar trotz ihres gleichen Gewichts zu unterschiedlichen statischen Gewichtswerten des Drucksensors führen, jedoch durch Analysieren des dynamischen Verhaltens mit Hilfe der Beschleunigungsdaten als gleich schwer erkannt werden können.

Mit der Erfindung kann folglich z.B. das Gewicht eines in einem Kindersitz sitzenden Kindes unabhängig von einer den Kindersitz in den Fahrzeugsitz drückenden Zusatzkraft bestimmt werden.

Tests, die in einem Versuchsaufbau mit einem gängigen Fahrzeugsitz auf einem Rütteltisch durchgeführt wurden, haben ergeben, daß zumindest bei maximalen Beschleunigungen von etwa 0,15 g bereits Anregungsfrequenzen von wenigen Hz ausreichen, um den Einfluß zusätzlicher masseloser Kräfte, die auf die jeweilige Masse einwirken, erkennen zu können. Außerdem wurde festgestellt, daß bereits Beschleunigungen von 0,03 g ausreichen, um den Einfluß derartiger Zusatzkräfte zu erkennen. An einem gängigen Kraftfahrzeug (VW-Passat GT mit Sportfederung) wurde ermittelt, daß selbst bei stillstehendem Fahrzeug mit laufendem Motor durch Vibrationen hervorgerufene Vertikalbeschleunigungen von etwa 0,04 g herrschen. Bei einer Fahrgeschwindigkeit von 70km/h auf einem guten Straßenbelag wurden maximale Beschleunigungen von 0,13 g gemessen, während eine Messung mit 50km/h auf einer schlechten Wegstrecke maximale Beschleunigungen von etwa 0,30 g ergaben. Nachweisbare dynamische Effekte treten also bereits bei bezogen auf die Praxis sehr geringen Beschleunigen auf.

Fahrtests in einem Fahrzeug unter Realbedingungen mit einem Prototyp-System gemäß der Erfindung haben bestätigt, daß die in der Praxis in einem fahrenden Fahrzeug auftretenden Beschleunigungen für eine ausreichende Anregung der jeweiligen Masse sorgen und eine Bestimmung von deren Gewicht unter Berücksichtigung der dynamischen Verhältnisse mit ausreichend großer Genauigkeit ermöglichen. Dabei hat sich gezeigt, daß bereits sehr kurze Zeitspannen unter typischen, repräsentativen Fahrbedingungen ausreichen, um eine für die Gewichtsbestimmung genügend große Datenmenge aufzunehmen.

Bevorzugt ist es, wenn als Beschleunigungssensor ein einen integrierten Schaltkreis umfassender elektronischer Baustein vorgesehen wird. Derartige Beschleunigungssensoren sind in Form von IC-Chips erhältlich, benötigen wenig Platz, sind einfach zu montieren, leicht auszulesen und zudem äußerst zuverlässig. Ein einen oder mehrere Drucksensoren umfassendes Insassennachweissystem kann somit ohne großen konstruktiven Aufwand und zu vergleichsweise niedrigen Zusatzkosten durch Hinzufügen zumindest eines derartigen Beschleunigungssensors zu einem erfindungsgemäßen System ergänzt werden.

Die Lösung der der Erfindung zugrundeliegenden Aufgabe erfolgt außerdem durch die Merkmale des unabhängigen Vorrichtungsanspruchs 19 und insbesondere dadurch, daß die Vorrichtung wenigstens einen dem Fahrzeugsitz zugeordneten Drucksensor zur Messung des über die Masse aufgebrachten Drucks, zumindest einen Beschleunigungssensor zur Messung der in vertikaler Richtung wirkenden Beschleunigung, und eine Auswerteeinheit umfaßt, mit der vom Drucksensor ermittelte Druckdaten gemeinsam mit vom Beschleunigungssensor ermittelten Beschleunigungsdaten auswertbar sind.

Dabei ist in einer bevorzugten praktischen Ausführung der Erfindung der Beschleunigungssensor am Fahrzeugsitz und insbesondere in unmittelbarer Nähe des Drucksensors angeordnet. Vorzugsweise ist ein gemeinsames Gehäuse für den Drucksensor und den Beschleunigungssensor vorgesehen. Hierdurch wird erreicht, daß die Beschleunigungen, welche die Masse erfährt, mit dem Beschleunigungssensor möglichst genau gemessen werden.

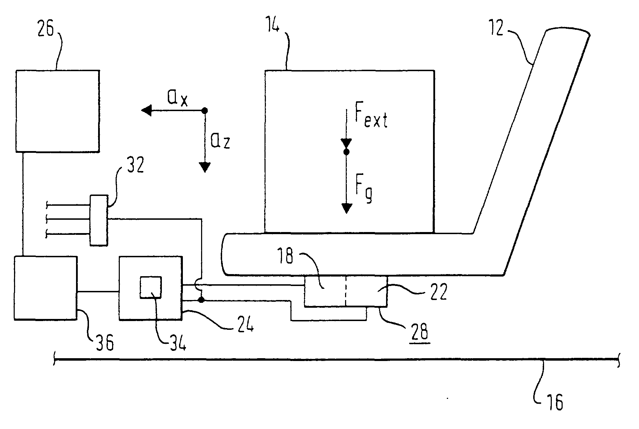

Bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben, deren einzige Figur eine schematische Darstellung einer Ausführungsform einer erfindungsgemäßen Vorrichtung zur Gewichtsbestimmung zeigt.

Die Figur zeigt einen in einem lediglich angedeuteten Fahrzeug 16 angeordneten Fahrzeugsitz 12, auf dem sich eine Masse 14 befindet. Bei dieser Masse 14 kann es sich z.B. um eine erwachsene Person, ein direkt auf dem Sitz 12 sitzendes Kind, ein in einem Kindersitz auf dem Fahrzeugsitz 12 sitzendes Kind oder lediglich einen Gegenstand wie beispielsweise einen leeren Kindersitz oder eine Tasche handeln.

Auf den Fahrzeugsitz 12 wirkt die Gewichtskraft F_{g} der Masse 14. Außerdem kann auf die Masse 14 in die gleiche Richtung wie die Gewichtskraft F_{g} eine externe Kraft Fₑₓₜ einwirken, so daß der über die Masse 14 auf den Fahrzeugsitz 12 aufgebrachte Druck durch die Summe der beiden Kräfte F_{g} und Fₑₓₜ bestimmt ist.

Unter dem Sitzpolster des Fahrzeugsitzes 12 befindet sich ein Gehäuse 28, in welchem ein Drucksensor 18 und ein Beschleunigungssensor 22 angeordnet sind. Das Gehäuse 28 befindet sich dabei zwischem dem Sitzpolster und dem nicht dargestellten Sitzrahmen bzw. der Sitzwanne des Fahrzeugsitzes 12. Bei dem Drucksensor 18 kann es sich beispielsweise um einen sogenannten "Bladder" mit einer fluidgefüllten Druckkammer handeln.

Grundsätzlich kommt erfindungsgemäß jede beliebige Art von Drucksensor in Frage. So kann es sich bei dem Drucksensor auch um eine Sensor-Anordnung mit mehreren Einzelsensoren handeln. Erfindungsgemäß kommen auch rahmenbasierte Drucksensoren in Frage, die mehrere an unterschiedlichen Stellen zwischen dem Sitzrahmen und der Fahrzeugkarosserie angeordnete Sensorelemente z.B. in Form von Dehnungsmeßstreifen aufweisen.

Bei dem Beschleunigungssensor handelt es sich bevorzugt um einen aufgrund seiner hohen Auflösung auch als "low-g-accelerometer" bezeichneten und frei erhältlichen elektronischen Baustein in SMD-Technologie.

Der Drucksensor 18 und der Beschleunigungssensor 22 sind an eine einen Mikroprozessor 34 aufweisende Auswerteeinheit 24 angeschlossen. Mit dem Mikroprozessor 34 werden die von den Sensoren 18, 22 gelieferten Signale nach zuvor erfolgter Signalbearbeitung und Analog/DigitalWandlung softwaregestützt nach einem vorgegebenen Algorithmus ausgewertet, auf den nachstehend noch näher eingegangen wird.

Die Auswerteeinheit 24 ist mit einer Steuereinheit 36 einer Airbaganordnung 26 verbunden. In Abhängigkeit von dem Ergebnis der Gewichtsbestimmung kann von der Auswerteeinheit 24 über die Steuereinheit 36 die Airbaganordnung 26 entweder aktiviert oder deaktiviert werden.

Der Beschleunigungssensor 22 kann außerdem mit einem Datenbus 32 verbunden sein, über den die Beschleunigungssignale anderen Fahrzeugeinrichtungen zur Verfügung gestellt werden können. Als Beispiele für derartige mit dem Datenbus 32 verbundene Einrichtungen kommen z.B. solche zur Überschlag- bzw. "Roll-over-"Erkennung und zum Diebstahlnachweis in Frage.

Während des Betriebs des Fahrzeugs 16 wird die Masse 14 beschleunigt, wobei der zeitliche Verlauf der in vertikaler Richtung wirkenden Beschleunigung az mit dem Beschleunigungssensor 22 gemessen wird. Die erzwungenen Schwingungen der Masse 14 werden durch die mit dem Drucksensor 18 gemessenen Druckdaten abgebildet.

In einem Beispiel für einen Algorithmus, nach welchem die Druckdaten und die Beschleunigungsdaten mittels des Mikroprozessors 34 gemeinsam in der Auswerteeinheit 24 ausgewertet werden, wird zunächst im Anschluß an die Bildung von normierten Größen für die Beschleunigung und den Druck die Kreuzkorrelation für in einem bestimmten, gerade verstrichenen Zeitintervall ermittelte Werte gebildet. Der Algorithmus wird nur dann fortgesetzt, wenn die Korrelation einen vorgegebenen Schwellenwert von beispielsweise 0,9 übersteigt. Anschließend wird für die Beschleunigungsdaten und die Druckdaten jeweils eine Standardabweichung sowie ein Verhältnis der Standardabweichungen berechnet, wobei letzteres nur dann berechnet wird, wenn die Standardabweichungen jeweils oberhalb eines vorgegebenen Schwellenwertes liegen. Diese Schwellenwerte sind derart festgelegt, daß deren Überschreitung eine für die Gewichtsbestimmung ausreichende Anregung der Masse 14 durch den Fahrzeugbetrieb bedeutet. Das aus den Standardabweichungen für den Druck und die Beschleunigung gebildete Verhältnis ist ein Maß für das tatsächliche Gewicht der Masse 14 und wird aufgrund seiner das dynamische Verhalten der Masse 14 berücksichtigenden Ermittlung auch als dynamisches Gewicht bezeichnet. Der aus dem Verhältnis der Standardabweichungen gebildete dynamische Gewichtswert wird daraufhin mit einem statischen Gewichtswert verglichen, der von der im statischen Zustand insgesamt auf den Drucksensor 18 einwirkenden Kraft - in dem dargestellten Ausführungsbeispiel von der Summe der Kräfte F_{g} und Fₑₓₜ - abhängig ist. Die Größen, die hierbei miteinander verglichen werden und zum einen das dynamische Gewicht und zum anderen das statische Gewicht der Masse 14 repräsentieren, sind derart gewählt, daß das Vorzeichen der Differenz der beiden Größen eindeutig anzeigt, ob es sich bei der Masse 14 um eine freie Masse handelt oder zusätzliche Kräfte z.B. von einem Haltegurt vorhanden sind, welche die Masse 14 in den Fahrzeugsitz 12 drücken.

Die Erfindung gestattet es somit, durch eine Auswertung der Druckdaten und Beschleunigungsdaten auf der Grundlage der für erzwungene Schwingungen geltenden Gesetze Aussagen darüber zu treffen, ob der vom Drucksensor 18 gemessene Druck allein von der Gewichtskraft der Masse 14 oder zum Teil zusätzlich von einer auf die Masse 14 einwirkenden externen Kraft herrührt.

Dabei findet erfindungsgemäß keine Mustererkennung z.B. durch Vergleich der gemessenen Daten mit in Tabellen abgelegten Referenzwerten statt, sondern die Erfindung gestattet es, einen Absolutwert für das tatsächliche Gewicht der Masse 14 zumindest innerhalb solcher Toleranzgrenzen zu bestimmen, die eine eindeutige Zuordnung der jeweiligen Masse 14 zu einer von mehreren Gewichtsklassen ermöglichen, zwischen denen durch die Gewichtsbestimmung unterschieden werden soll.

So kann beispielsweise mittels der Erfindung zwischen einem erwachsenen Menschen mit einem unter bevölkerungsstatistischen Gesichtspunkten sehr geringen Gewicht einerseits und einem Kind auf einem durch eine Gurtkraft in den Fahrzeugsitz 12 gedrückten Kindersitz andererseits sicher unterschieden werden.

Darüber hinaus kann der Beschleunigungssensor 28 dazu verwendet werden, den Neigungswinkel des Fahrzeugsitzes 12 bezüglich der Vertikalen abzuleiten und die vom Drucksensor 18 ermittelten Druckdaten entsprechend zu korrigieren, indem die statische Beschleunigung, d.h. der allein von der Erdbeschleunigung abhängige Anteil der gemessenen Beschleunigung, herangezogen wird.

Außerdem ist es möglich, zur Messung der in Fahrtrichtung wirkenden Beschleunigung a_{X} entweder einen zusätzlichen Beschleunigungssensor oder einen zur Messung von a_{Z} und a_{X} ausgebildeten Zwei-Achsen-Beschleunigungssensor einzusetzen. Beim Beschleunigen und Abbremsen des Fahrzeugs 16 auftretende störende Effekte auf die mittels des Drucksensors 18 gemessenen Druckdaten können auf diese Weise zuverlässig kompensiert werden.

Mit den vorstehend erwähnten Maßnahmen kann die Genauigkeit der erfindungsgemäßen Gewichtsbestimmung erhöht werden.

Im Fall der Verwendung eines vorstehend bereits erwähnten "Bladder" als Drucksensor 18 kann mit Hilfe des Beschleunigungssensors 22 eine ständige Funktionsüberwachung des Drucksensors 18 durchgeführt werden. So ist beispielsweise ein eingeklemmter Fluidschlauch des Drucksensors 18 daran zu erkennen, daß zwar der Fluiddruck in dessen Druckkammer innerhalb eines Sollbereiches liegt, jedoch keine oder lediglich sehr geringe Druckschwankungen trotz gleichzeitiger vertikaler Beschleunigungen az nachgewiesen werden. Des weiteren lassen sich mit der Erfindung Leckagezustände am Drucksensor 18 dadurch nachweisen, daß unterschiedliche Füllgrade der Druckkammer zu unterschiedlichen Drucksignalen führen.

### Bezugszeichenliste

- 12: Fahrzeugsitz
- 14: Masse
- 16: Fahrzeug
- 18: Drucksensor
- 22: Beschleunigungssensor
- 24: Auswerteeinheit
- 26: Insassenrückhaltesystem
- 28: Gehäuse
- 32: Datenbus
- 34: Mikroprozessor
- 36: Steuereinheit

## Patentansprüche

1. Verfahren zum Bestimmen des Gewichts einer auf einem Fahrzeugsitz (12) befindlichen Masse (14), bei dem während des Betriebs des Fahrzeugs
- mit wenigstens einem dem Fahrzeugsitz (12) zugeordneten Drucksensor (18) der über die Masse (14) aufgebrachte Druck gemessen wird,
- mit zumindest einem Beschleunigungssensor (22) die in vertikaler Richtung wirkende Beschleunigung (az) gemessen wird, und
- die Druckdaten gemeinsam mit den Beschleunigungsdaten ausgewertet werden.

2. Verfahren nach Anspruch 1,
**dadurch gekennzeichnet,**
**daß** der zeitliche Verlauf der Druckdaten mit dem zeitlichen Verlauf der Beschleunigungsdaten verglichen wird.

3. Verfahren nach Anspruch 1 oder 2,
**dadurch gekennzeichnet,**
**daß** nach einer Korrelation zwischen dem zeitlichen Verlauf der Druckdaten und dem zeitlichen Verlauf der Beschleunigungsdaten gesucht wird.

4. Verfahren nach zumindest einem der vorhergehenden Ansprüche,
**dadurch gekennzeichnet,**
**daß** anhand der Beschleunigungsdaten überprüft wird, ob zeitliche Variationen, insbesondere zumindest näherungsweise periodische Druckschwankungen, der Druckdaten durch den Betrieb des Fahrzeugs (16) hervorgerufen werden.

5. Verfahren nach zumindest einem der vorhergehenden Ansprüche,
**dadurch gekennzeichnet,**
**daß** die Beschleunigungsdaten und die Druckdaten jeweils normiert werden.

6. Verfahren nach zumindest einem der vorhergehenden Ansprüche,
**dadurch gekennzeichnet,**
**daß** aus den Druckdaten ein statischer Gewichtswert für die Masse (14) abgeleitet wird.

7. Verfahren nach zumindest einem der vorhergehenden Ansprüche,
**dadurch gekennzeichnet,**
**daß** aus den Beschleunigungsdaten und den Druckdaten ein dynamischer Gewichtswert für die Masse (14) abgeleitet wird.

8. Verfahren nach Anspruch 7,
**dadurch gekennzeichnet,**
**daß** der dynamische Gewichtswert nur dann abgeleitet wird, wenn zwischen dem zeitlichen Verlauf der Druckdaten und dem zeitlichen Verlauf der Beschleunigungsdaten eine Korrelation besteht.

9. Verfahren nach zumindest einem der vorhergehenden Ansprüche,
**dadurch gekennzeichnet,**
**daß** zur Berechnung des dynamischen Gewichtswertes für die Beschleunigungsdaten und die Druckdaten jeweils eine Standardabweichung sowie ein Verhältnis der Standardabweichungen berechnet wird.

10. Verfahren nach Anspruch 9,
**dadurch gekennzeichnet,**
**daß** das Verhältnis nur dann berechnet wird, wenn die Standardabweichungen jeweils einen vorgegebenen Schwellwert überschreiten

11. Verfahren nach zumindest einem der Ansprüche 7 bis 10,
**dadurch gekennzeichnet,**
**daß** der dynamische Gewichtswert mit einer vom statischen Gewichtswert abhängigen Größe verglichen wird.

12. Verfahren nach zumindest einem der vorhergehenden Ansprüche,
**dadurch gekennzeichnet,**
**daß** aus den Beschleunigungsdaten ein Neigungswinkel des Fahrzeugsitzes (12) bezüglich der Vertikalen abgeleitet wird und die Druckdaten einer Neigungskorrektur unterzogen werden.

13. Verfahren nach Anspruch 12,
**dadurch gekennzeichnet,**
**daß** zur Ableitung des Neigungswinkels mit dem Beschleunigungssensor (22) die statische Beschleunigung gemessen wird.

14. Verfahren nach zumindest einem der vorhergehenden Ansprüche, **dadurch gekennzeichnet,**
**daß** die in Fahrtrichtung wirkende Beschleunigung (a_{X}) gemessen und zu einer Korrektur der Druckdaten herangezogen wird.

15. Verfahren nach zumindest einem der vorhergehenden Ansprüche, **dadurch gekennzeichnet,**
**daß** auf der Grundlage der Druckdaten und der Beschleunigungsdaten eine insbesondere ständige Funktionsüberwachung des Drucksensors (18) durchgeführt wird.

16. Verfahren nach zumindest einem der vorhergehenden Ansprüche, **dadurch gekennzeichnet,**
**daß** die Druckdaten und die Beschleunigungsdaten in einer mikroprozessorunterstützten Auswerteeinheit (24) nach zumindest einem vorgegebenen Algorithmus automatisch ausgewertet werden.

17. Verfahren nach zumindest einem der vorhergehenden Ansprüche, **dadurch gekennzeichnet,**
**daß** in Abhängigkeit von dem Ergebnis der Auswertung ein Insassenrückhaltesystem (26) des Fahrzeugs (16), insbesondere eine Airbag-Anordnung, aktiviert oder deaktiviert wird.

18. Verfahren nach zumindest einem der vorhergehenden Ansprüche, **dadurch gekennzeichnet,**
**daß** eine Vorrichtung nach zumindest einem der nachstehenden Ansprüche verwendet wird.

19. Vorrichtung zum Bestimmen des Gewichts einer auf einem Fahrzeugsitz (12) befindlichen Masse (14), insbesondere zur Durchführung des Verfahrens nach zumindest einem der vorhergehenden Ansprüche, mit
- wenigstens einem dem Fahrzeugsitz (12) zugeordneten Drucksensor (18) zur Messung des über die Masse (14) aufgebrachten Drucks,
- zumindest einem Beschleunigungssensor (22) zur Messung der in vertikaler Richtung wirkenden Beschleunigung (az), und
- einer Auswerteeinheit (24), mit der vom Drucksensor (18) ermittelte Druckdaten gemeinsam mit vom Beschleunigungssensor (22) ermittelten Beschleunigungsdaten auswertbar sind.

20. Vorrichtung nach Anspruch 19,
**dadurch gekennzeichnet,**
**daß** der Beschleunigungssensor (22) am Fahrzeugsitz (12), bevorzugt in unmittelbarer Nähe des Drucksensors (18), und insbesondere bevorzugt mit dem Drucksensor (18) in einem gemeinsamen Gehäuse (28) angeordnet ist.

21. Vorrichtung nach Anspruch 19 oder 20,
**dadurch gekennzeichnet,**
**daß** der Drucksensor (18) und/oder der Beschleunigungssensor (22) unter dem Sitzpolster und insbesondere zwischen dem Sitzpolster und dem Sitzrahmen bzw. der Sitzwanne des Fahrzeugsitzes (12) angeordnet sind.

22. Vorrichtung nach zumindest einem der Ansprüche 19 bis 21, **dadurch gekennzeichnet,**
**daß** der Beschleunigungssensor (22) mit einem Datenbus (32) gekoppelt ist, über den die Beschleunigungsdaten weiteren Fahrzeugeinrichtungen, insbesondere einem Insassenrückhaltesystem (26) des Fahrzeugs (16), zur Verfügung stellbar sind.

23. Vorrichtung nach zumindest einem der Ansprüche 19 bis 22, **dadurch gekennzeichnet,**
**daß** der Beschleunigungssensor (22) in Form eines einen integrierten Schaltkreis umfassenden elektronischen Bausteins vorgesehen ist.
